# EUROPÄISCHE PATENTSCHRIFT

(11) **EP 0 742 698 B1**
(45) Veröffentlichungstag und Bekanntmachung des Hinweises auf die Patenterteilung: **13.08.1997**
(21) Anmeldenummer: 95907631.6
(22) Anmeldetag: 31.01.1995
(51) Int. Cl.: A61C 7/10

(54) **DEHNSCHRAUBE**
JACKSCREW
ECARTEUR A VIS

(30) Priorität: 03.02.1994 DE 4403214
(43) Veröffentlichungstag der Anmeldung: 20.11.1996
(73) Patentinhaber: DENTAURUM J.P. WINKELSTROETER KG, D-75228 Ispringen (DE)
(72) Erfinder: WALTER, Berthold, D-75196 Remchingen-Singen (DE)
(74) Vertreter: Wössner, Gottfried
(86) Internationale Anmeldenummer: EP9500328
(87) Internationale Veröffentlichungsnummer: WO9520924

(56) Entgegenhaltungen:
- WO-A-92/16159
- DE-A- 4 125 853
- US-A- 4 887 950

## Beschreibung

Die Erfindung betrifft eine Dehnschraube für Kieferdehnvorrichtungen mit einer Spindel, umfassend einen Spindelkopf und mindestens einen Gewindeabschnitt, mit zwei beiderseits des Spindelkopfs angeordneten und durch die Spindel relativ zueinander verstellbaren Dehnschraubenkörpern und mit mindestens einem sich in Verstellrichtung der Dehnschraubenkörper erstreckenden Führungselement.

Solche Dehnschrauben sind in der Literatur vielfältig bekannt, beispielsweise aus dem deutschen Patent DE-C 37 28 759 oder auch der DE 41 25 853 A1.

Der Begriff "Dehnschraube" wird im Zusammenhang mit der vorliegenden Erfindung für Schraubenanordnungen verwendet, mit denen Dehn- und Zugkräfte auf Kiefer und/oder Zähne eines Patienten ausgeübt werden können und schließt somit auch sogenannte Zugschrauben ein.

Der Begriff Spindelkopf wird im vorliegenden Zusammenhang allgemein für das Teil einer Spindel verwendet, das so ausgebildet ist, daß es als Aufnahme für ein Werkzeug dienen kann, mit dem die Spindel gedreht werden kann. Häufig vorkommende Ausgestaltungen des Spindelkopfes umfassen eine Sechskantform, einen erweiterten Teil der Spindel mit zwei durchgehenden, senkrecht zueinander verlaufenden Bohrungen oder auch eine einfache durch einen Gewindeabschnitt der Spindel verlaufende Bohrung.

Nachteilig ist der hohe Fertigungsaufwand bei der Herstellung der teilweise komplexen Dehnschraubenkörper (vgl. z.B. DE 41 25 853 A1, Fig. 1). Angesichts der relativ hohen bei der Kieferregu-lierung von der Dehnschraube ausgeübten Kräfte (ca. 8 kg absolut) sind Kunststoffe als Werkstoffe ungeeignet, da diese bei solchen Kräften zum Fliessen oder Kriechen neigen. Damit wäre jedoch nur eine unzureichende Korrekturmaßnahme möglich und insbesondere die auf das Kiefer wirkenden Kräfte wären durch den behandelnden Arzt nicht genau beherrschbar und einstellbar.

Aufgabe der vorliegenden Erfindung ist es, eine Dehnschraube vorzuschlagen, bei der der Fertigungsaufwand verringert ist, ohne daß jedoch gleichzeitig dadurch die Vorbestimmbarkeit der Richtung der Krafteinleitung durch die Dehnschraube leidet.

Diese Aufgabe wird bei einer Dehnschraube der eingangs beschriebenen Art erfindungsgemäß dadurch gelöst, daß die Dehnschraubenkörper aus Kunststoff gefertigt sind und ein zum Gewindeabschnitt der Spindel komplementäres Innengewinde umfassen, wobei ein Teil des Innengewindes von einem in den Kunststoffdehnschraubenkörper eingesetzten Gewindeteil und ein weiterer Teil des Innengewindes im Kunststoffdehnschraubenkörper selbst gebildet ist, wobei das Gewindeteil aus einem Material hergestellt ist, welches einen Elastizitätsmodul von mindestens 20 kN/mm² und eine Zugfestigkeit von mindestens 100 N/mm² aufweist.

Durch die erfindungsgemäße Ausbildung der Dehnschraube wird gewährleistet, daß zum einen die meist komplizierten und deswegen teuer zu fertigenden Dehnschraubenkörper in Kunststoff zu spritzen sind, was die Herstellungskosten drastisch senkt, wobei trotzdem durch die Verwendung eines einfachen und damit auch billigen Gewindeteils aus einem festeren, vorzugsweise metallischen Material eine exakte Übertragung der Dehnkräfte möglich ist, wie sie von den herkömmlichen, ganz aus Metall gefertigten Dehnschrauben bekannt ist.

Das Gewindeteil kann entweder in eine Ausnehmung des Kunststoffdehnschraubenkörpers eingesetzt werden oder aber bereits beim Herstellen des Kunststoffkörpers umspritzt werden und somit direkt und ohne weitere Maßnahmen am Dehnschraubenkörperteil gehalten werden.

Das einfache und billige metallische Gewindeteil übernimmt die eigentliche Funktion der exakten Kraftaufnahme- und -übertragung der bisher verwendeten komplizierten metallenen Dehnschraubenkörper und überträgt diese Kraft auf den Kunststoffdehnschraubenkörper. Der Kunststoffdehnschraubenkörper hat im wesentlichen nur noch die Aufgabe der parallelen Führung von Spindel und Führungselementen, die in entsprechende Bohrungen der Kunststoffkörper eingesetzt werden können.

Anstelle eines metallischen Werkstoffes für die Herstellung des Gewindeteils können alternativ beispielsweise hochgefüllte Kunststoffe verwendet werden.

Bevorzugte Kunststoffe zur Herstellung der Dehnschraubenkörper sind Thermoplaste oder Duroplaste.

Als Thermoplaste haben sich hochfeste Kunststoffe, wie z.B. faserverstärkte Polycarbonate oder Polyamide, bewährt.

Als Werkstoff für das Gewindeteil, die Spindel und die Führungselemente wird vorzugsweise auf Titan oder Titanlegierungen zurückgegriffen. Alternativ können diese Bauteile auch aus Stahl hergestellt sein.

Bevorzugt wird der weitere, im Kunststoffdehnschraubenkörper selbst ausgebildete Teil des Innengewindes durch den Gewindeabschnitt der Spindel in den Kunststoffkörper geschnitten. Dies erfordert dann bei der Herstellung des Kunststoffdehnschraubenkörpers nur die Ausbildung einer entsprechenden Bohrung bzw. die Herstellung eines vorgeschnittenen Gewindes, das in seiner endgültigen Gestalt durch einen Schneidvorgang beim Eindrehen des Gewindeabschnitts der Spindel in den Kunststoffdehnschraubenkörper komplettiert wird.

Vorzugsweise wird der Kunststoff zur Herstellung des Dehnschraubenkörpers so ausgewählt, daß bei den üblich herrschenden Kräfteverhältnissen eine geringe plastische Verformung des im Kunststoffkörper selbst ausgebildeten Teils des Innengewindes vorkommt, so daß dieses hemmend wirkt.

Bei einer bevorzugten Ausführungsform der Erfindung kann vorgesehen sein, daß die Dehnschraubenkörper jeweils einstückig mit einer Kieferdehnplatte ausgebildet sind.

Hierbei wird eigentlich auf die bekannten Dehnschraubenkörper vollständig verzichtet, und deren Funktion wird von den Kieferdehnplatten übernommen. Für die Herstellung ist dann vorgesehen, daß die Spindel mit dem auf dem Gewindeabschnitt aufgeschraubten metallenen Gewindeteil und die Führungselemente von einem Dehnschraubenhalter in ihrer später vorgesehenen relativen Position zueinander gehalten werden, bis diese Teile dann in die Kieferdehnplatte eingegossen sind. Danach kann der Dehnschraubenhalter entfernt werden, da jetzt die Kieferdehnplatten die Führungsfunktion und Haltefunktion übernehmen.

Diese und weitere Vorteile der Erfindung werden im folgenden anhand der Zeichnung noch näher erläutert. Es zeigen:
- Figur 1: eine teilweise aufgebrochene Darstellung einer erfindungsgemäßen Dehnschraube in der Draufsicht; und
- Figur 2: eine Schnittansicht der Dehnschraube aus Figur 1 entlang Linie 2 - 2.

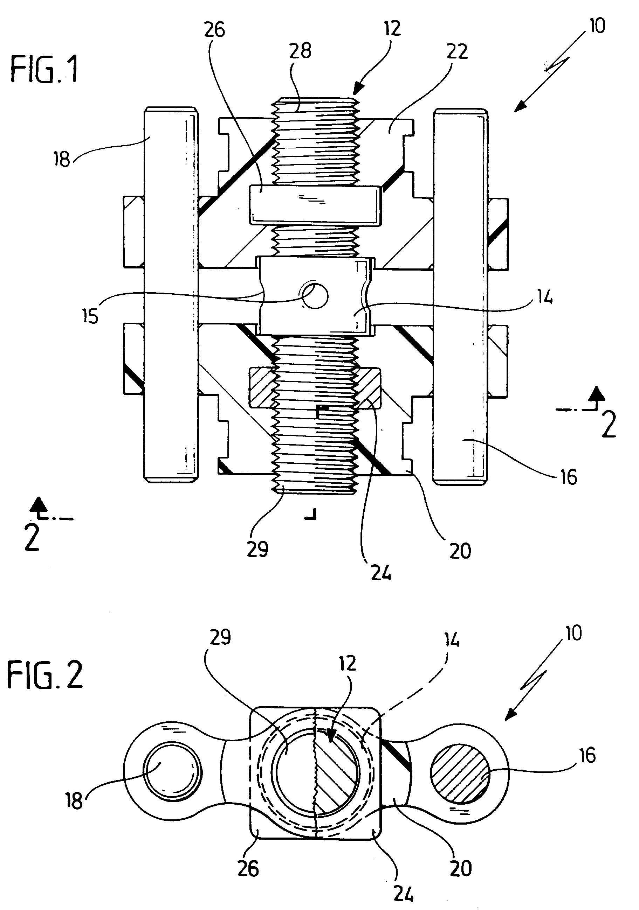

Die in Figur 1 dargestellte Dehnschraube für eine Kieferdehnvorrichtung ist insgesamt mit dem Bezugszeichen 10 versehen und umfaßt in paralleler Anordnung eine Doppelgewindespindel 12 sowie zwei beiderseits der Spindel 12 angeordnete Führungselemente 16 und 18.

Die Doppelspindel 12 weist mittlg zu ihrer Längsrichtung einen Spindelkopf 14 auf, in den zwei senkrecht zueinander stehende Bohrungen, die quer zur Längsachse der Spindel 12 verlaufen, eingebracht sind und in die mit einem Stift eingegriffen werden kann, um die Spindel 12 um ihre Längsachse zu drehen.

Bei dem in Figur 1 dargestellten Ausführungsbeispiel der Erfindung werden die Führungselemente 16, 18 und die Spindel 12 von zwei Dehnschraubenkörpern 20, 22 gehalten, die beidseits des Spindelkopfes 14 angeordnet sind.

Die Dehnschraubenkörper 20, 22 haben die Aufgabe, die Führungselemente 16 und 18 sowie die Spindel 12 in paralleler Anordnung zueinander zu halten.

Ferner stellen die Dehnschraubenkörper 20, 22 eine Halterung für metallische Gewindeteile 24, 26 dar, in die zwei Gewindeabschnitte 28, 29 der Spindel 12 eingeschraubt sind. Die beiden Gewindeabschnitte 28, 29 sind gegenläufig ausgeführt, so daß sich bei einer Drehung der Spindel die Gewindeteile 24, 26 aufeinander zu bzw. voneinander weg bewegen.

Die Gewindeteile 24, 26 stellen ein Widerlager für die Gewindeabschnitte 28, 29 in den Dehnschraubenkörpern 20, 22 dar und übertragen sehr präzise die über eine Drehbewegung der Spindel ausgeübte Kraft auf den Kunststoffdehnschraubenkörper 20 bzw. 22. Vorzugsweise sind weitere Teile der Dehnschraubenkörper 20, 22 mit einem Innengewinde versehen, wie in der Figur 1 dargestellt, so daß der Gewindeabschnitt 28 bzw. 29 in entsprechende Innengewinde der Dehnschraubenkörper 22 bzw. 20 eingreift. Es kann auch vorgesehen sein, daß in den Dehnschraubenkörpern 20, 22 zunächst nur Bohrungen vorgesehen sind, in die die Gewindeabschnitte 28, 29 der Spindel 12 selbst Gewindegänge einschneiden beim erstmaligen Eindrehen der Gewindeabschnitte in die Dehnschraubenkörper 20, 22.

Bei dieser Konstruktion kann auf die Herstellung von metallenen und kompliziert gestalteten Dehnschraubenkörpern verzichtet werden und anstelle dessen die Dehnschraubenkörper 20, 22 in Kunststoff gespritzt werden. Dabei werden vorzugsweise die Gewindeteile 24, 26 mit umspritzt, d.h. gleich miteingebaut. Ebenso können entsprechende Bohrungen für die Aufnahme der Gewindeabschnitte 28 und 29 der Spindel 12 sowie Durchführungen für die Führungselemente in Form der Führungsbolzen 16 und 18 beim Spritzvorgang mit ausgebildet werden.

Die Vorbestimmbarkeit der Richtung der Kraftübertragung gewährleisten bei der erfindungsgemäßen Dehnschraube nicht Kunststoffteile, sondern die metallenen Gewindeteile 24, 26, die sich großflächig am Kunststoff abstützen.

Figur 2 zeigt schließlich eine teilweise Schnittansicht längs Linie 2 - 2 der erfindungsgemäßen Dehnschraube gemäß Figur 1, wobei das sich am Dehnschraubenkörper abstützende Profil des Gewindeteils 24 deutlich zu sehen ist.

Bei einer alternativen Ausführungsform der Erfindung wird auf die Vorabherstellung der Dehnschraubenkörper 20, 22 verzichtet und die Dehnschraube mit ihren metallenen Bestandteilen, nämlich der Spindel 12 mit den aufgeschraubten Gewindeteilen 24, 26 sowie den parallel dazu angeordneten Führungselementen 16 und 18, mit einem sogenannten Dehnschraubenhalter in ihrer später notwendigen relativen Position zueinander gehalten und dann direkt mit Kunststoff umspritzt oder eingebettet, um damit gleichzeitig die beiden zueinander verstellbaren Kieferdehnplatten zu bilden.

Nach dem Umspritzen oder Einbetten der Metallteile mit den Kieferdehnplatten läßt sich der Dehnschraubenhalter entfernen, da jetzt die Einzelteile der Dehnschraube, nämlich die Spindel 12 mit den Gewindeteilen 24 und 26 sowie die beiden Führungselemente 16 und 18 relativ zueinander fixiert sind. Die Kieferdehnplatten übernehmen jetzt die Führungs- und Haltefunktion, und der Raum für den Zugriff zum Spindelkopf 14 wurde zuvor durch den Dehnschraubenhalter freigehalten, so daß dieser jetzt frei zugänglich zwischen den beiden Kieferdehnplatten liegt.

Im Falle der Verwendung der in Figur 1 und 2 gezeigten Kieferdehnschrauben wird die Kieferdehnschraube in ihrer durch die Dehnschraubenkörper 20 und 22 zusammengehaltenen Konfiguration in die entsprechenden Kieferdehnplatten eingegossen, wobei hier beim Herstellungsvorgang unter Umständen auf den Dehnschraubenhalter verzichtet werden kann.

## Patentansprüche

1. Dehnschraube (10) für Kieferdehnvorrichtungen mit einer Spindel (12), umfassend einen Spindelkopf (14) und mindestens einen Gewindeabschnitt (28; 29), mit zwei beiderseits des Spindelkopfs (14) angeordneten und durch die Spindel (12) relativ zueinander verstellbaren Dehnschraubenkörpern (20, 22) und mit mindestens einem sich in Verstellrichtung der Dehnschraubenkörper (20, 22) erstreckenden Führungselement (16, 18), wobei die Dehnschraubenkörper das Führungselement und die Spindel in paralleler Anordnung zueinander halten, dadurch gekennzeichnet, daß die Dehnschraubenkörper (20, 22) aus Kunststoff gefertigt sind und ein zum Gewindeabschnitt (28, 29) der Spindel (12) komplementäres Innengewinde umfassen, wobei ein Teil des Innengewindes von einem in den Kunststoffdehnschraubenkörper (20, 22) eingesetzten Gewindeteil (24, 26) und ein weiterer Teil des Innengewindes im Kunststoffdehnschraubenkörper (20, 22) selbst gebildet ist, wobei das Gewindeteil (24, 26), welches das Führungselement in Verstellrichtung nicht führt, aus einem Material hergestellt ist, welches einen Elastizitätsmodul von mindestens 20 kN/mm² und eine Zugfestigkeit von mindestens 100 N/mm² aufweist.

2. Dehnschraube nach Anspruch 1, dadurch gekennzeichnet, daß als Kunststoff zur Herstellung der Dehnschraubenkörper (20, 22) Thermoplaste oder Duroplaste verwendet sind.

3. Dehnschraube nach Anspruch 2, dadurch gekennzeichnet, daß als Thermoplast eine Mischung Polyphenylenoxid und Polystyrol verwendet wird.

4. Dehnschraube nach einem der Ansprüche 1 bis 3, dadurch gekennzeichnet, daß die Spindel (12) und/oder die Führungs-elemente (16, 18) aus Titan oder Titanlegierungen gefertigt sind, wobei die Führungselemente (16, 18) gegebenenfalls Anschläge zur Festlegung einer maximal möglichen Verstellung des Dehnschraubenkörpers umfassen.

5. Dehnschraube nach einem der Ansprüche 1 bis 4, dadurch gekennzeichnet, daß der weitere, im Kunststoffdehnschraubenkörper (20, 22) selbst ausgebildete Teil des Innengewindes durch den Gewindeabschnitt (28, 29) der Spindel (12) in den Kunststoffkörper geschnitten ist.

6. Dehnschraube nach einem der Ansprüche 1 bis 5, dadurch gekennzeichnet, daß der im Kunststoffkörper ausgebildete Teil des Innengewindes hemmend auf eine Drehbewegung des Gewindeabschnitts (28, 29) der Spindel (12) wirkt.

7. Dehnschraube nach einem der Ansprüche 1 bis 6, dadurch gekennzeichnet, daß die Dehnschraubenkörper (20, 22) jeweils einstückig mit einer Kieferdehnplatte ausgebildet sind.

## Claims

1. Expansion bolt (10) for jaw expansion devices, having a spindle (12) comprising a spindle head (14) and at least one threaded section (28; 29), having two expansion bolt bodies (20, 22) disposed on either side of the spindle head (14) and adjustable relative to one another by means of the spindle (12), and having at least one guide element (16, 18) extending in the adjustment direction of the expansion bolt bodies (20, 22), wherein the expansion bolt bodies hold the guide element and the spindle in a parallel arrangement to one another, characterized in that the expansion bolt bodies (20, 22) are made of plastics material and comprise an internal thread complementary to the threaded section (28, 29) of the spindle (12), wherein a part of the internal thread is formed by a threaded part (24, 26) inserted in the plastics-material expansion bolt body (20, 22) and a further part of the internal thread is formed in the plastics-material expansion bolt body (20, 22) itself, wherein the threaded part (24, 26), which does not guide the guide element in the adjustment direction, is made of a material which has a modulus of elasticity of at leapt 20 kN/mm² and a tensile strength of at least 100 N/mm².

2. Expansion bolt according to Claim 1, characterized in that thermoplastics materials or thermosetting materials are used as plastics material to produce the expansion bolt bodies (20, 22).

3. Expansion bolt according to Claim 2, characterized in that a mixture of polyphenylene oxide and polystyrene is used as thermoplastics material.

4. Expansion bolt according to one of Claims 1 to 3, characterized in that the spindles (12) and/or the guide elements (16, 18) are made of titanium or titanium alloys, wherein the guide elements (16, 18) optionally comprise stops for fixing a maximum possible adjustment of the expansion bolt body.

5. Expansion bolt according to one of Claims 1 to 4, characterized in that that further part of the internal thread formed in the plastics-material expansion bolt body (20, 22) itself is cut into the plastics-material body by the threaded section (28, 29) of the spindle (12).

6. Expansion bolt according to one of Claims 1 to 5, characterized in that that part of the internal thread formed in the plastics-material body has a restraining effect on a rotational movement of the threaded section (28, 29) of the spindle (12).

7. Expansion bolt according to one of Claims 1 to 6, characterized in that the expansion bolt bodies (20, 22) are each formed integrally with a jaw expansion plate.

## Revendications

1. Ecarteur à vis (10) pour dispositifs écarteurs de mâchoire, comprenant une vis (12) qui présente elle-même une tête de vis (14) et au moins un segment fileté (28 ; 29), deux corps (20, 22) d'écarteur à vis disposés de part et d'autre de la tête (14) de la vis et qui peuvent être déplacés l'un par rapport à l'autre par la vis (12), et au moins un élément de guidage (16, 18) qui s'étend dans la direction du déplacement des corps (20, 22) de l'écarteur à vis, les corps de l'écarteur à vis pouvant maintenir l'élément de guidage et la vis dans des dispositions parallèles, caractérisé en ce que les corps (20, 22) de l'écarteur à vis sont fabriqués en matière plastique et comprennent un filetage intérieur complémentaire du segment fileté (28, 29) de la vis (12), cependant qu'une partie du filetage intérieur est formée par une partie filetée (24, 26) incorporée dans les corps en matière plastique (20, 22) de l'écarteur à vis, et qu'une autre partie de filetage intérieur est formée dans les corps en matière plastique (20, 22) de l'écarteur à vis eux-mêmes, la partie filetée (24, 26) étant fabriquée en une matière qui présente un module d'élasticité d'au moins 20 kN/mm² et une résistance à la traction d'au moins 100 N/mm²

2. Ecarteur à vis selon la revendication 1, caractérisé en ce que l'on utilise des thermoplastes ou des thermodurcissables en tant que matière plastique pour la fabrication des corps (20, 22) de l'écarteur à vis .

3. Ecarteur à vis selon la revendication 2, caractérisé en ce qu'on utilise comme thermoplaste un mélange d'oxyde de polyphénylène et de polystyrène.

4. Ecarteur à vis selon une des revendications 1 à 3, caractérisées en ce que la vis (12) et/ou les éléments de guidage (16, 18) sont fabriqués en titane ou en alliages de titane, les éléments de guidage (16,10) comprenant éventuellement des butées servant à fixer le déplacement maximum possible des corps de l'écarteur à vis.

5. Ecarteur à vis selon une des revendications 1 à 4 caractérisé en ce que l'autre partie du filetage intérieur qui est formée dans le corps en matière plastique (20, 22) lui- même de l'écarteur à vis est taillée dans le corps en matière plastique par le segment fileté (28, 29) de la vis (12).

6. Ecarteur à vis selon une des revendications 1 à 5, caractérisé en ce que la partie du filetage intérieur formée par le corps en matière plastique a une action de blocage sur le mouvement de rotation du segment fileté (28, 29) de la vis (12).

7. Ecarteur à vis selon une des revendications 1 à 6 caractérisé en ce que les corps (20, 22) de l'écarteur à vis sont formés chacun en une seule pièce avec une plaque de l'écarteur de mâchoire.
